# EUROPÄISCHE PATENTSCHRIFT

(11) **EP 4 118 949 B1**
(45) Veröffentlichungstag und Bekanntmachung des Hinweises auf die Patenterteilung: **09.08.2023**
(21) Anmeldenummer: 22183241.3
(22) Anmeldetag: 06.07.2022
(51) Int. Cl.: A01D 89/00

(54) **AUFNAHMEVORRICHTUNG FÜR EINE ERNTEMASCHINE**
PICKUP FOR A HARVESTER
DISPOSITIF DE RAMASSAGE POUR UNE MOISSONEUSE

(30) Priorität: 13.07.2021 DE 102021118023
(43) Veröffentlichungstag der Anmeldung: 18.01.2023
(73) Patentinhaber: B. Strautmann & Söhne GmbH u. Co. KG, 49196 Bad Laer (DE)
(72) Erfinder: Strautmann, Wolfgang, 49196 Bad Laer (DE)
(74) Vertreter: Dr. Träger & Strautmann PAe PartG mbB

(56) Entgegenhaltungen:
- EP-A1- 3 028 558
- DE-A1-102018 121 273
- DE-B3-102013 109 678

## Beschreibung

Die Erfindung betrifft eine Aufnahmevorrichtung an einer Erntemaschine für Halm- und Blattgut oder an einer Heuwerbemaschine. Bei der Erntemaschine kann es sich z.B. um einen Ladewagen, eine Ballenpresse oder einen Feldhäcksler handeln, bei den Heuwerbemaschinen kommen beispielsweise Schwadleger (Merger) in Betracht.

Solche Aufnahmevorrichtungen werden auch als "Pick-up" bezeichnet. Bekannte Aufnahmevorrichtungen umfassen:
- eine antreibbare Trommel mit einer Drehachse und einem Trommelmantel,
- auf der Trommel angeordnete Aufnahmezinken, deren Schenkel den Außenradius der Trommel nach außen überragen und bei rotierender Trommel Erntegut vom Boden aufnehmen,
- einen gegenüber der rotierenden Trommel feststehenden Abstreifkamm mit darauf angeordneten Abstreifern, zwischen welche die Aufnahmezinken bei Rotation der Trommel eintauchen und dabei das mitgeführte Erntegut an den Abstreifern abstreifen.

Aus DE 10 2020 001 828 A1 und DE 10 2020 008 089 A1 ist jeweils eine Aufnahmevorrichtung an einer Erntemaschine bekannt, die Aufnahmezinken aufweist, die in an der Pick-up vorgesehenen Aufnahmetaschen einsetzbar sind. Zur Befestigung der Aufnahmezinken sind Druckplatten vorgesehen, mittels derer die Aufnahmezinken kraftschlüssig in den Zinkentaschen verspannt werden. Um die Zinkentaschen in die Pick-up-Trommel einzubringen ist ein erheblicher Fertigungsauswand erforderlich.

Aus DE 197 40 589 A1 ist eine Aufnahmevorrichtung mit einer Trommel und einem kammartigen Abstreifer bekannt. Die Trommel wird gebildet aus offenen U-Profilen, welche durch Mantelbleche miteinander verbunden sind. Die Aufnahmezinken sind als Doppelschenkelfedern ausgebildet und aus einem Federstahl hergestellt. Der spiralförmige Windungsbereich ist in den U-Profilen aufgenommen, so dass nur die Schenkel (Abschnitte 32) den Trommelrand überragen. Aus DE 10 2018 121273 A1 ist eine weitere Aufnahmevorrichtung bekannt.

Bei dieser Aufnahmevorrichtung wird Halmgut, welches von den kammartigen Abstreifern nicht sauber abgestreift werden kann, an den Abstreifern vorbeigeführt. Unter ungünstigen Bedingungen, insbesondere bei langhalmigem Erntegut, kann solches Erntegut auf der Trommel wickeln oder sich an Vorsprüngen, beispielsweise in den offenen U-Schienen, festsetzen. Dies kann zu Störungen und/oder Schäden an den Bauteilen führen.

Aufgabe der Erfindung ist es, die beschriebenen Nachteile zu beseitigen und eine Aufnahmevorrichtung vorzuschlagen, bei der das Erntegut vollständiger und damit besser von den Abstreifern abgestreift wird.

Diese Aufgabe wird gelöst durch eine Aufnahmevorrichtung mit den Merkmalen des Anspruchs 1.

Die Aufnahmevorrichtung umfasst:
- eine antreibbare Trommel mit einer Drehachse und mit einem Trommelmantel, welcher einen Außenradius aufweist,
- auf der Trommel angeordnete Aufnahmezinken, deren Schenkel den Außenradius der Trommel nach außen überragen und die gegenüber der Drehachse einen Außenradius aufweisen und bei rotierender Trommel Erntegut, vorzugsweise Halm- und Blattgut, vom Boden aufnehmen,
- einen Abstreifkamm mit darauf angeordneten Abstreifern, die eine Abstreifer-Außenkontur aufweisen und in einem freien Ende auslaufen, wobei das freie Ende gegenüber der Drehachse einen Abstand aufweist, der gleich groß oder größer ist als der Außenradius der Trommel,
so dass das freie Ende sich bei rotierender Trommel an die radiale Umfangskontur des Trommelmantels anschmiegt.

Erfindungsgemäß ist die Trommel aus einem gekanteten Blechzuschnitt hergestellt und umfasst ebene Abschnitte zur Anbringung der Aufnahmezinken, wobei auf der Trommel der Aufnahmevorrichtung wenigstens ein Gegenwerkzeug angeordnet, das eine Außenkontur aufweist, die im montierten Zustand einen Außenradius gegenüber der Drehachse aufweist,
- der größer ist als der Abstand des freien Endes der Abstreifer zur Drehachse
- und kleiner ist als der Außenradius der Aufnahmezinken gegenüber der Drehachse, so dass zumindest ein Teilbereich des Gegenwerkzeuges bei rotierender Trommel an zumindest einem Teilbereich der Abstreifer-Außenkontur entlang gleitet und die Abnahme des von den Aufnahmezinken aufgenommenen Erntegutes durch die Abstreifer unterstützt.

Das Gegenwerkzeug überragt den Abstreifer somit an seinem freien Ende und taucht bei Rotation der Trommel unter den Abstreifern weg. Hierdurch wird die Übergabe des Ernteguts von der Trommel an die Abstreifer unterstützt.

Die Trommel kann einen Trommelmantel mit einer - beispielsweise durch Abkanten hergestellten - Vieleck-Kontur eines regelmäßigen Polygons aufweisen. Hierdurch ist der Abstand von der Zinkenspitze des Abstreifers zur Oberfläche der Trommel bei Rotation der Trommel alternierend. Am engsten ist der genannte Abstand immer an der Kantung. In der Regel ist dies auch die Stelle, an der der Zinkenfuß eines auf der Trommel angebrachten Zinkens beginnt. Der Zinkenfuß wird vorzugsweise durch zwei Haltebleche auf der Trommel gehalten. Alternativ zu einem als eigenständiges Bauteil aufgebrachten Halteblech kann auch eine aus dem Trommelmantel herausgearbeitet Lasche vorgesehen sein. Am größten ist der Abstand von Abstreiferspitze und Trommelmantel-Oberfläche in der Mitte zwischen zwei Kanten. Vorzugsweise ist dies die Stelle, an der sich der Schenkel des Aufnahmezinkens auf dem Fuß erhebt.

Sollte sich Erntegut zwischen Zinkenspitze und Mantelblech setzen, dann wird dieses dort bei enger werdendem Abstand tendenziell eingeklemmt und bei größer werdendem Abstand freigegeben. In Drehrichtung wechseln sich diese Wirkungen ständig ab. Der im Bereich der Kantung enger werdende Abstand führt kombiniert mit der hemmenden Wirkung des von oben aufdrückenden Erntegutmaterials dazu, dass die Zinkenspitze des Abstreifers durch das Erntegut durchgestoßen wird und die Spitze des Abstreifers so das Erntegut untergreifen kann.

Die Oberfläche des Abstreifers und die Oberfläche des Haltebleches bilden in dem Bereich, in dem die Abstreiferspitze bei Rotation der Trommel auf das Halteblech des Förderzinkens trifft (in Drehrichtung gesehen) einen sehr stumpfen Winkel. Dieser führt dazu, dass der Zinken sich unter dem Material hindurchdrehen will. Hierdurch wird das zu fördernde Material in Richtung auf die Spitze das Förderzinkens geschoben. Dabei legt es sich zumindest ansatzweise U-förmig um den Förderzinken, so dass es bei weiter in Drehrichtung drehender Trommel von dem nachfolgenden Bereich des Abstreifers untergriffen werden kann.

Die beschriebene Wirkung wird durch die in Richtung des vom Zentrum des Mantelbleches wegweisenden Endes des Haltebleches sich verjüngende (enger werdende) Form des Halteblechs noch unterstützt, denn die U-förmige Schlaufe des Erntegut-Materials, das sich um den Förderzinken gelegt hat, wird durch die von oben auftretende Haftreibung tendenziell kleiner. Ursache hierfür ist das Bestreben des Aufnahmezinkens, sich unter dem Material hinwegzuziehen. Stellt man sich die Aufnahmetrommel wie eine Uhr und die Aufnahmezinken wie deren Zeiger vor, so haben die Aufnahmezinken im vierten Bewegungsquadranten, also dann, wenn sie sich in einer Position zwischen 9.00 Uhr und 12.00 Uhr befinden, eine rupfende Wirkung. Durch die stufige Oberfläche die das Halteblech in Drehrichtung gesehen mit dem Aufnahmezinken bildet, wird das Material am "Zurückfallen" gehindert.

Das Gegenwerkzeug kann an einer besonders kritischen Stelle angeordnet sein um dort die Erntegutübergabe an die Abstreifer zu unterstützen.

Vorzugsweise ist jedoch nicht nur ein einziges Gegenwerkzeug an einer kritischen Stelle angeordnet, sondern die Trommel über ihre komplette Breite mit Gegenwerkzeugen bestückt. Besonders bevorzugt ist darüber hinaus, dass die Trommel nicht nur eine Reihe von Gegenwerkzeugen aufweist, sondern mehrere Reihen. So kann in Umfangsrichtung gesehen beispielsweise in jeder zweiten, oder auch in jeder Reihe von Aufnahmezinken ein Gegenwerkzeug zugeordnet sein.

Die Gegenwerkzeuge können unterschiedlich konzipiert sein. Sie können in Form von separaten Bauteilen auf dem Trommelmantel angebracht sein. Alternativ dazu ist es auch möglich, die Gegenwerkzeuge in die Zinkenbefestigung zu integrieren, so dass die entsprechenden Bauteile eine Doppelfunktion übernehmen und einerseits die Aufnahmezinken fixieren und andererseits als Gegenwerkzeug für die Abstreifer fungieren.

Ein Gegenwerkzeug kann so konzipiert sein, dass es mit einem einzelnen Abstreifer oder mit einer Gruppe von Abstreifern zusammenwirkt. Unabhängig von der konkreten Ausgestaltung ist den Gegenwerkzeuge gemeinsam, dass sie im montierten Zustand den Trommelmantel zumindest teilweise überragen und bei Rotation der Trommel zumindest mit einem Teilbereich ihrer Außenkontur zwischen zwei benachbarten Abstreifern hindurchgeführt werden. Der die Trommel überragende Konturbereich der Gegenwerkzeuge bewirkt, dass das Erntegut gegenüber der Trommeloberfläche angehoben und dadurch leichter von den Abstreifern erfasst und weitergeleitet werden kann.

Vorzugsweise ist das oder sind die Gegenwerkzeuge mit Befestigungsmitteln lösbar auf dem Trommelmantel anbringbar. Defekte und/oder verschlissene Gegenwerkzeuge sind so einfach auswechselbar. Weiterhin ist der Einsatz unterschiedlicher, an die jeweiligen Erntebedingungen angepasster, Gegenwerkzeuge möglich.

Um die Montage- und Teilekosten zu reduzieren, kann vorgesehen sein, dass die Aufnahmezinken und die Gegenwerkzeuge mit denselben Befestigungsmitteln auf der Trommel befestigt sind. Bei den Befestigungsmitteln kann es sich vorzugsweise um Schrauben handeln.

Vorzugsweise umfasst ein Gegenwerkzeug einen Befestigungsbereich, der dazu dient, das Gegenwerkzeug auf Trommel zu befestigen und dort sicher zu halten sowie einen an den Befestigungsbereich angrenzenden Abstreifbereich, der dazu dient das Abstreifen des Ernteguts an den Abstreifern zu unterstützen, wobei
- eine im montierten Zustand zum Trommelmantel weisende Kontur des Befestigungsbereiches im montierten Zustand am Trommelmantel anliegt
- und eine im montierten Zustand zum Trommelmantel weisende Kontur des Abstreifbereiches sich in einem Winkel gegenüber dem Trommelmantel anhebt.

Der am Trommelmantel anliegende Befestigungsbereich ist so konzipiert, dass das Erntegut widerstandsarm an ihm entlanggleiten kann. So wird die Gefahr zu reduziert, dass Erntegut sich an vorspringenden Ecken und Kanten festsetzt. Der sich an den Befestigungsbereich anschließende Abstreifbereich hebt das Erntegut über die Enden der Abstreifer hinaus an, so dass das Erntegut bei Rotation der Trommel von den Abstreifern untergriffen und widerstandsarm weitergeleitet wird.

Der Winkel zwischen dem Abstreifbereich des Gegenwerkzeugs und dem Trommelmantel beeinflusst den Kraftbedarf und das Abstreifverhalten. Um eine gleitende Übergabe des Ernteguts von den Gegenwerkzeugen - und damit von der Trommel - an die Abstreifer zu ermöglichen, handelt es sich bei diesem Winkel um einen spitzen Winkel, der vorzugsweise 5° bis 50°, höchst vorzugsweise 20° bis 30° beträgt.

In einer bevorzugten Ausführung
- weist das freie Ende der Abstreifer eine Außenkontur auf, die sich in Richtung Trommelmantel verjüngt,
- und der Abstreifbereich des Gegenwerkzeugs weist eine Außenkontur auf, die sich in Richtung Trommelmantel verbreitert.

Die Verjüngung des Abstreifers kann in einer Spitze oder in einer gerundeten Form enden. Die Verjüngung bewirkt, dass der Abstreifer widerstandsarm in den Fördergutstrom des Ernteguts einstechen kann. Das Einstechen durch das spitz oder gerundet ausgeführte Ende des Abstreifers erfolgt radial gesehen oberhalb des Trommelmantels, da die Abstreifer so konzipiert sind, dass ihre Enden bei Rotation der Trommel unmittelbar am oder zumindest mit geringem Abstand zum Trommelmantel angeordnet sind.

Damit Gegenwerkzeug und Abstreifer spaltarm aneinander vorbeigleiten können, weisen die Gegenwerkzeuge an der Übergangsstelle zum Trommelmantel eine Kontur auf, die an die Enden der Abstreifer angepasst ist. In gleichem Maße, wie sich die Abstreifer von ihrem Ende aus verbreitern, verjüngt sich die Kontur des Abstreifbereiches der Gegenwerkzeuge. Bei rotierender Trommel gleitet somit die sich verjüngende Außenkontur des freien Abstreifer-Endes an der sich verbreiternden Außenkontur des Gegenwerkzeuges entlang. Im Ergebnis sticht somit nicht nur das Ende des Abstreifers widerstandarm in den Erntegutstrom ein, sondern das Erntegut wird insgesamt widerstandsarm von der Trommel an die Abstreifer übergeben.

Vorzugsweise umfasst das Gegenwerkzeug und/oder das Halteblech wenigstens einen Vorsprung, der im montierten Zustand in eine im Trommelmantel vorgesehene und zu dem Vorsprung kompatible Öffnung eingreift. Dieser Vorsprung bildet ein kostengünstiges und die Montagezeit reduzierendes Befestigungsmittel für das Gegenwerkzeug und ermöglicht eine sichere Fixierung des Gegenwerkzeuges auf der Trommel. Wird der Vorsprung des Gegenwerkzeuges in die Trommel hineingesteckt, so ergibt sich ein wippenartiger Effekt, wenn dieses Gegenwerkzeug mittels einer von außen durch den Trommelmantel gesteckte und in eine Gewindebohrung des Gegenwerkzeuges eingedrehten Schraube befestigt wird: Die Schraube zieht den im Inneren der Trommel befindlichen Bereich des Gegenwerkzeuges in Richtung Trommel-Innenwandung. Dabei stützt sich das Gegenwerkzeug auf der Kante der Trommelmantel-Öffnung ab und drückt den außerhalb des Trommel-Innenraums befindlichen Teil des Gegenwerkzeuges in Richtung Trommelmantel. Somit kann ein zwischen Gegenwerkzeug und Trommelmantel befindlicher Teil des Zinkensockels an die Trommel gepresst und dort fixiert werden.

Zudem kann durch einen in Drehrichtung der Trommel gesehen vor dem Befestigungsbereich angeordneten und in die Trommel eingreifenden Vorsprung ein widerstandsarmer Übergang von Trommelmantelfläche zur Oberfläche des Gegenwerkzeuges geschaffen werden.

Wie bereits erläutert, können Teilbereiche der Konturen von Abstreifer und Gegenwerkzeug so ausgeführt sein, dass sie bei Rotation der Trommel über die Länge dieser Teilbereiche aneinander entlanggleiten. Dabei kann vorgesehen sein, dass das Gegenwerkzeug wenigstens eine erste Scherkante und der Abstreifer wenigstens eine zweite Scherkante aufweist, die bei rotierender Trommel als Messer und Gegenmesser fungieren und etwaiges zwischen die Scherkanten geratendes Erntegut abscheren.

Durch die scherende Wirkung wird die Gefahr reduziert, das Erntegutpartikel bei Rotation der Trommel zwischen Gegenwerkzeug und Abstreifer eingeklemmt werden und einen Bremseffekt auf die rotierende Trommel ausüben.

Im dargestellten Ausführungsbeispiel weisen die Gegenwerkzeuge einen Konturbereich auf, der an die Kontur der freien Enden der Abstreifer angepasst ist. Die Gegenwerkzeuge sind aus einem Blech gefertigt, was für die Ausbildung der Kanten als Scherkanten vorteilhaft ist.

Der Bereich des Gegenwerkzeuges, der bei Rotation der Trommel von einem Abstreifer durchlaufen wird, kann einen Konturbereich umfassen, der komplementär zur Kontur des freien Endes eines Abstreifers ist. Die Konturen von Gegenwerkzeug und Abstreifer können folglich dreieckig, halbrund, halboval, rechteckig, trapezartig oder andersartig gestaltet sein. In einer bevorzugten Ausführung umfasst das Gegenwerkzeug einen rechteckigen, gerundeten oder trapezförmigen Konturbereich, welcher an die Kontur des freien Endes der Abstreifer angepasst ist, so dass das Gegenwerkzeug bei Rotation der Trommel wenigstens an zwei, vorzugsweise an einem Teilbereich des Konturbereiches entlanggleitet. Soweit Gegenwerkzeug und Abstreifer als Messer und Gegenmesser fungieren sollen, wird ein spaltfreier Übergang zwischen Gegenwerkzeug und Abstreifer bevorzugt. Die bei Rotation der Trommel durchgeführte Schnittbewegung ist vorzugsweise ein ziehender Schnitt nach Art einer Schere.

Das Gegenwerkzeug kann aus einem flexiblen Material hergestellt sein, welches sich bei Rotation der Trommel an den das Gegenwerkzeug kontaktierenden Konturbereich des Abstreifers anpasst. Hierdurch reduziert sich die Reibung zwischen Gegenwerkzeug und Abstreifer und gravierende Beschädigungen werden vermieden.

In einer weiteren Ausführungsform kann das Gegenwerkzeug und/oder das zur Befestigung eines Aufnahmezinkens vorgesehene Halteblech eine Klemme zur Befestigung wenigstens eines Aufnahmezinkens bilden, wobei vorzugsweise je eine Klemme zur Befestigung je eines Aufnahmezinkens vorgesehen sein kann. Ein als Gegenwerkzeug ausgebildetes Halteblech übernimmt somit eine Doppelfunktion. Einerseits wird der Aufnahmezinken durch die Klemmfunktion des Halteblechs auf der Trommel fixiert, andererseits wird den Gutsfluss behinderndes Erntegut durch das Zusammenwirken von Werkzeug (Abstreifer) und Gegenwerkzeug (Halteblech) so bearbeitet, dass sich der Förderwiderstand reduziert und die Übergabe des von den Aufnahmezinken erfassten Ernteguts an nachfolgende Aggregate erleichtert wird. Damit die Außenkante des Haltewerkzeugs, beziehungsweise der Klemme, eine Scherkante ausbilden kann, muss die Klemme mindestens so breit sein, wie der Aufnahmezinken oder den Aufnahmezinken seitlich überragen. Ist der Aufnahmezinken breiter als die Klemme, bildet nicht die Klemme, sondern die äußere Seitenkante des Aufnahmezinkens die Gegenwerkzeug-Scherkante. In beiden Fällen bildet die Kombination aus Klemme und Aufnahmezinken jedoch ein Gegenwerkzeug mit einer ersten Schneidkante für die mit einer zweiten Schneidkante versehenen Abstreifer.

Vorzugsweise umfassen die Klemmen zur Befestigung der Aufnahmezinken eine Öffnung zur Aufnahme eines am Förderzinken ausgebildeten Vorsprungs. Vorsprung und Öffnung sind wenigstens teilweise formschlüssig aufeinander abgestimmt. Die Aufnahmezinken werden durch die Klemmen somit nicht nur kraftschlüssig an die Trommel gedrückt, sondern zudem auch formschlüssig gehalten. Hierdurch werden in Querrichtung auf die Förderzinken einwirkende Kräfte kompensiert und ein seitliches Ausbrechen der Förderzinken aus der Halterung wird verhindert.

Alternativ zu einer Herstellung einer formschlüssigen Verbindung zwischen den Gegenwerkzeugen, beziehungsweise Befestigungsklemmen, und dem Förderzinken kann auch eine Nut am Sockel des Förderzinkens vorgesehen sein, in die ein stegartiger Teil der Befestigungsklemme formschlüssig eingreift.

Wenn die Förderzinken gruppenweise und zueinander benachbart auf der Trommel angeordnet sind, können die Klemmen so angeordnet sein, dass zwischen ihnen auf der Oberfläche des Trommelmantels ein Freiraum verbleibt. In diesem Fall weisen die Enden der Abstreifer vorzugsweise einen Abstand zur Drehachse auf, der dem Außendurchmesser der Trommel entspricht. Bei im Arbeitseinsatz rotierender Trommel überstreichen die Enden der Abstreifer die Trommeloberfläche abstandslos oder mit einem sehr geringen Abstand von vorzugsweise maximal 2 mm.

Alternativ dazu ist es aber auch möglich, dass zwei benachbarte Gegenwerkzeuge einander kontaktieren und eine Kontaktstelle mit einem gegenüber dem Trommelradius größeren Radius ausbilden. Die Enden der Abstreifer sind dementsprechend bei Rotation der Trommel um den Betrag von der Oberfläche des Trommelmantels beabstandet, der sich aus der Differenz des Umlaufradius der Abstreifer-Enden zum Trommelradius ergibt. Die Enden der Abstreifer nehmen somit eine gegenüber dem Trommelmantel erhöhte Position ein und gleiten mit ihren Scherkante bei Rotation der Trommel an den Scherkanten der Gegenwerkzeuge entlang.

Weiterhin ist es möglich, dass das Gegenwerkzeug nicht durch ein auf der Trommel angebrachtes Teil oder eine Befestigungsklemme eines Förderzinkens ausgebildet wird, sondern durch den Aufnahmezinken selbst. In diesem Fall umfasst der Aufnahmezinken wenigstens eine Außenkante, die eine erste Scherkante bildet. Die am Aufnahmezinken ausgebildete Scherkante wirkt wiederum mit wenigstens einer der an einem der Abstreifer ausgebildeten zweiten Schneidkanten zusammen. Bei rotierender Trommel gleitet dann die Außenkante des Aufnahmezinkens an der Scherkante eines Abstreifers entlang, so dass Aufnahmezinken und Abstreifer als Werkzeug und Gegenwerkzeug zusammenwirken und die Abnahme des von den Aufnahmezinken aufgenommenen Erntegutes durch die Abstreifer unterstützen. Um die Standzeit der als Scherkanten fungierenden Aufnehmerzinken-Außenkanten zu erhöhen, kann eine Stahlkante an den Außenkanten der Aufnahmezinken oder ein besonders robustes Kunststoffmaterial für die Außenkante des Aufnahmezinkens oder den Aufnahmezinken insgesamt vorgesehen sein.

Die erfindungsgemäße Aufgabe wird weiterhin gelöst durch eine Erntemaschine für Halm- und Blattgut oder Heuwerbemaschine, mit einer Aufnahmevorrichtung nach einem der Ansprüche 1 bis 14.

Weitere, die Erfindung verbessernde Maßnahmen werden nachstehend mit der Beschreibung von bevorzugten Ausführungsbeispielen der Erfindung anhand der Figuren näher dargestellt.
- Fig. 1: zeigt eine Erntemaschine in Gestalt eines Ladewagens mit einer Aufnahmevorrichtung in einer schematischen Seitenansicht;
- Fig. 2: zeigt die Aufnahmevorrichtung der Erntemaschine aus Fig. 1 in einer perspektivischen Ansicht;
- Fig. 3: zeigt einen Teilbereich einer ersten Ausführungsform der Aufnahmevorrichtung aus Fig. 2 in einer geschnittenen Darstellung;
- Fig. 4: zeigt den in Figur 3 dargestellten Teilbereich in einer Seitenansicht;
- Fig. 5: zeigt ein erstes Ausführungsbeispiel eines Gegenwerkzeuges in einer perspektivischen Ansicht;
- Fig. 6: zeigt das Gegenwerkzeug aus Figur 5 in einer Seitenansicht;
- Fig. 7: zeigt einen Teilbereich einer zweiten Ausführungsform der Aufnahmevorrichtung aus Fig. 2 in einer geschnittenen Darstellung;
- Fig. 8: zeigt den in Figur 7 dargestellten Teilbereich in einer Seitenansicht;
- Fig. 9: zeigt ein zweites Ausführungsbeispiel eines Gegenwerkzeuges in einer perspektivischen Ansicht;
- Fig. 10: zeigt das Gegenwerkzeug aus Figur 9 in einer Seitenansicht.
- Fig. 11: zeigt einen Teilbereich einer dritten Ausführungsform der Aufnahmevorrichtung aus Fig. 2 in einer geschnittenen Darstellung;
- Fig. 12: zeigt den in Figur 11 dargestellten Teilbereich in einer Seitenansicht;
- Fig. 13: zeigt ein drittes Ausführungsbeispiel eines Gegenwerkzeuges in einer perspektivischen Ansicht;
- Fig. 14: zeigt das Gegenwerkzeug aus Figur 13 in einer Seitenansicht;
- Fig. 15: zeigt einen Teilbereich einer vierten Ausführungsform der Aufnahmevorrichtung aus Fig. 2 in einer geschnittenen Darstellung;
- Fig. 16: zeigt den in Figur 15 dargestellten Teilbereich in einer Seitenansicht;
- Fig. 17: zeigt ein viertes Ausführungsbeispiel eines Gegenwerkzeuges in einer perspektivischen Ansicht;
- Fig. 18: zeigt das Gegenwerkzeug aus Figur 17 in einer Seitenansicht;
- Fig. 19: zeigt einen Teilbereich einer fünften Ausführungsform der Aufnahmevorrichtung; aus Fig. 2 in einer geschnittenen Darstellung;
- Fig. 20: zeigt den in Figur 19 dargestellten Teilbereich in einer Seitenansicht;
- Fig. 21: zeigt ein fünftes Ausführungsbeispiel eines Gegenwerkzeuges in einer perspektivischen Ansicht;
- Fig. 22: zeigt das Gegenwerkzeug aus Figur 21 in einer Seitenansicht.

Gleiche oder ähnliche Elemente können in den nachfolgenden Figuren mit gleichen oder ähnlichen Bezugszeichen versehen sein. Ferner enthalten die Figuren der Zeichnung, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht näher beschriebenen Kombinationen zusammengeführt werden können. Die Erfindung erstreckt sich ausdrücklich auch auf solche Ausführungsformen, welche nicht durch Merkmalskombinationen aus expliziten Rückbezügen der Ansprüche gegeben sind, womit die offenbarten Merkmale der Erfindung, soweit dies technisch sinnvoll ist, beliebig miteinander kombiniert sein können. Die in den Figuren dargestellten Ausführungsbeispiele haben somit nur beschreibenden Charakter und sind nicht dazu gedacht, die Erfindung in irgendeiner Form einzuschränken.

Die im Weiteren verwendeten Begriffe: "obere", "oben", "untere", "linke" oder "rechte" beziehen sich auf die in der Zeichnung dargestellte Anordnung der Komponenten.

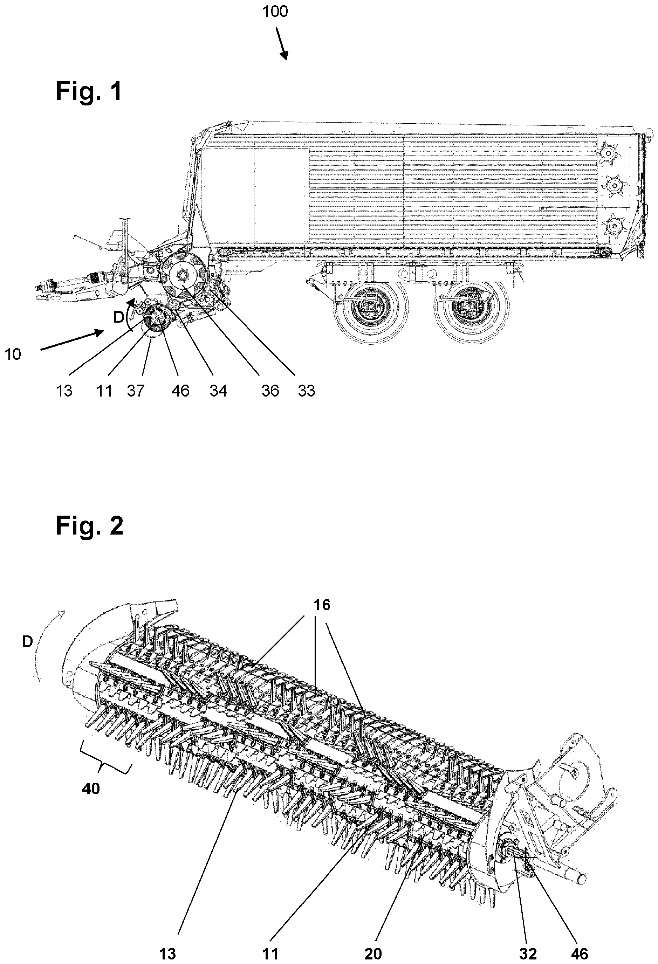

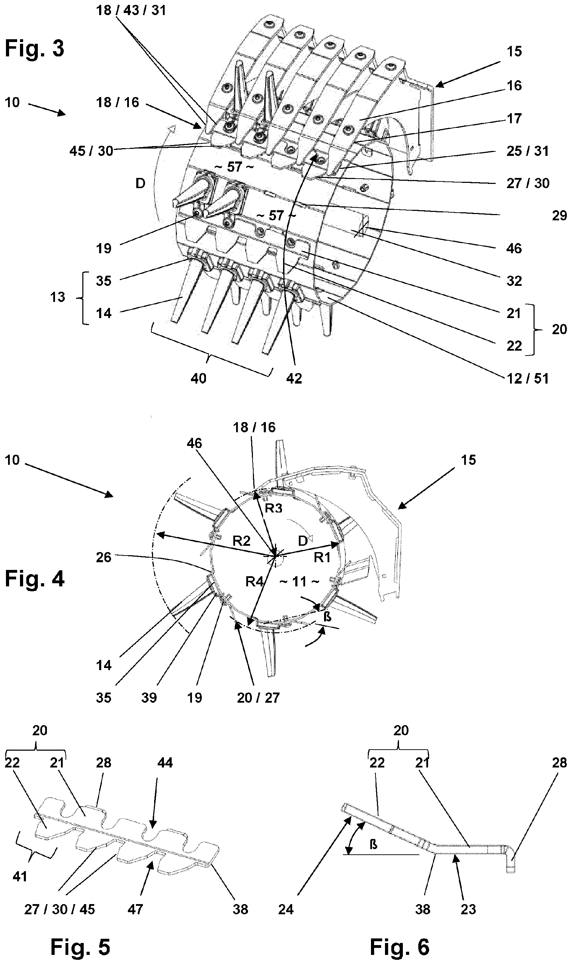

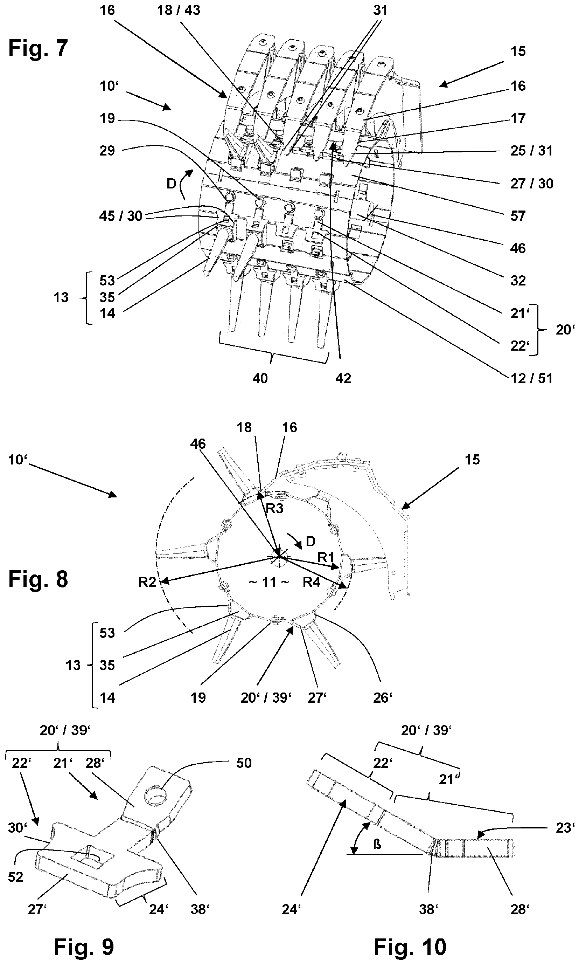

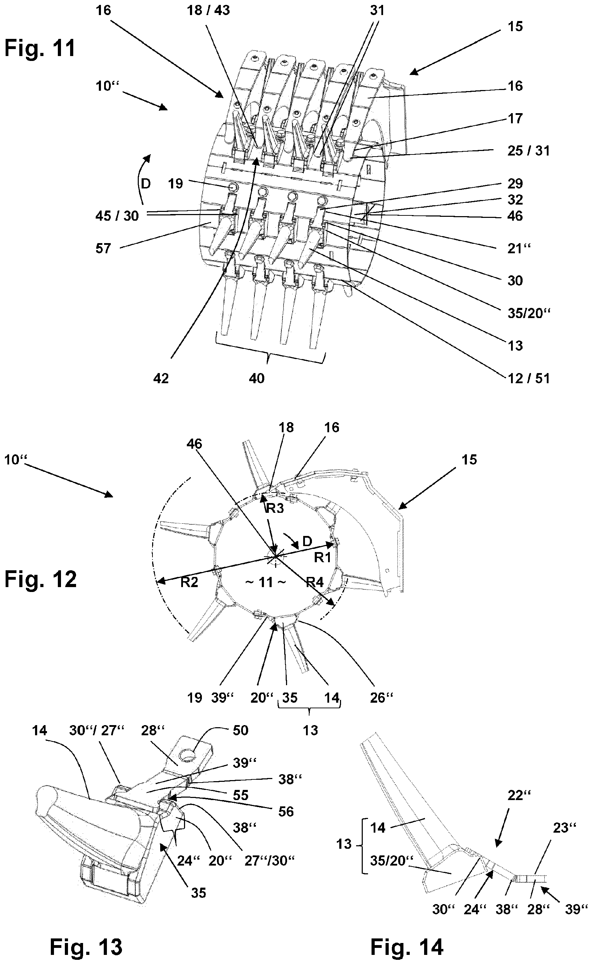

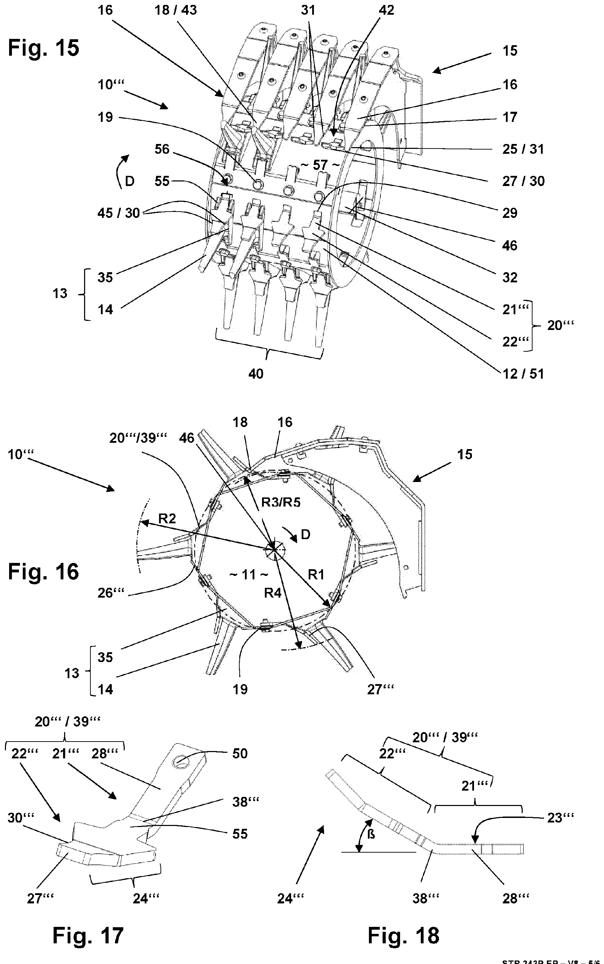

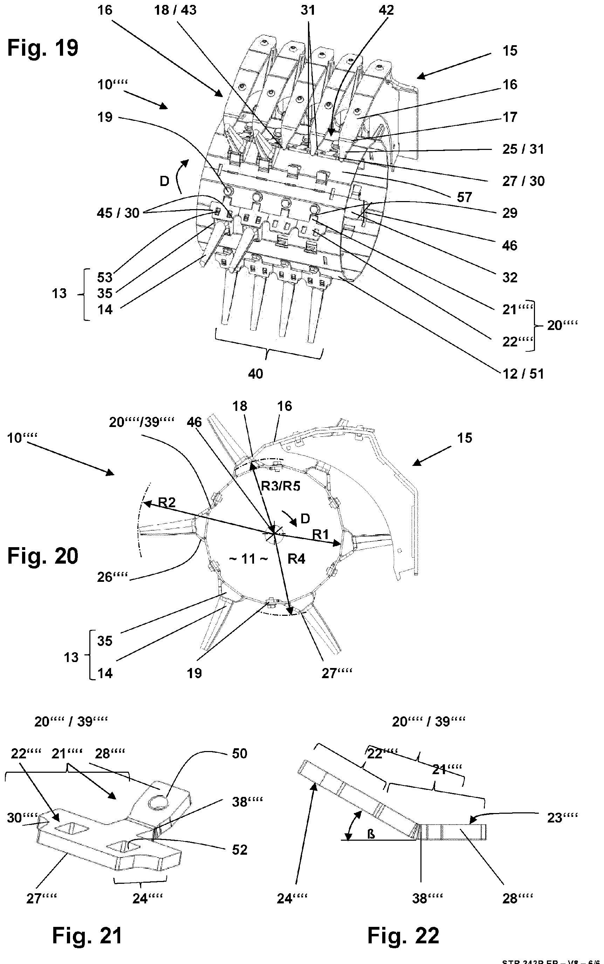

Figur 1 zeigt eine landwirtschaftliche Erntemaschine 100 in Form eines Ladewagens. Der im Ausführungsbeispiel dargestellte Ladewagen umfasst eine erste Ausführungsform einer Aufnahmevorrichtung, nämlich eine Aufnahmevorrichtung 10. Wie im weiteren Verlauf der Beschreibung noch erläutert wird, kann die Aufnahmevorrichtung in unterschiedlichen Ausführungsformen vorliegen. Fünf in Betracht kommende Varianten sind als Aufnahmevorrichtungen 10 (Fig. 3 bis 6), 10' (Fig. 7 bis 10), 10" (Figuren 11 bis 14), 10'" (Fig. 15 bis 18) und 10ʺʺ (Fig. 19 bis 22) nachfolgend näher erläutert.

Die in Figur 1 beispielhaft dargestellte Aufnahmevorrichtung 10 umfasst eine walzenförmigen Trommel 11, die aus wenigstens einem gekanteten Blechzuschnitt 51 hergestellt ist. In den dargestellten Ausführungsbeispielen weist der gekantete Blechzuschnitt 51 ebene Abschnitte 57 und darauf angebrachten Aufnahmezinken 13 auf. Im Arbeitseinsatz stützt die Aufnahmevorrichtung 10 sich auf Tasträdern 37 ab. Die Trommel 11 ist auf einer Antriebswelle 32 gelagert. Die Trommel 11 und die darauf angebrachten Aufnahmezinken 13 rotieren im Arbeitseinsatz um die Antriebswelle 32 in eine Drehrichtung D. Antriebswelle 32 und Trommel 11 weisen somit eine Drehachse 46 auf.

Weiterhin umfasst der Ladewagen eine Schneidvorrichtung 33, ein Fahrwerk und einen oberhalb des Fahrwerks angeordneten Laderaum. Ferner ist mit Bezugszahl 34 eine an sich bekannte Zuführwalze dargestellt, die Bestandteil eines den Transport des Ernteguts unterstützenden Continous-Flow-Systems ist. Das Continous-Flow-Systems wird auch als CFS-Ladeaggregat bezeichnet.

Figur 2 zeigt die beispielhaften Aufnahmevorrichtung aus Fig. 1 in einer freigestellten, perspektivischen Ansicht. Die Trommel 11 umfasst einen Trommelmantel 12, der aus einem Blechzuschnitt hergestellt ist und einen äußeren Außenradius R1 aufweist. Auf der Trommel 11 sind eine Vielzahl von Aufnahmezinken 13 angebracht, die den Außenradius R1 der Trommel 11 überragen. Die Aufnahmezinken 13 sind hier beispielhaft dargestellt. Im dargestellten Ausführungsbeispiel handelt es sich um Einzelzinken, die im Wesentlichen einen Sockel 35 und daraus hervortretenden Schenkel 14 umfassen.

Die Figuren 3 bis 6, 7 bis 10, 11 bis 14, 15 bis 18 und 19 bis 22 zeigen fünf unterschiedliche Ausführungsbeispiele von Aufnahmevorrichtungen 10, 10', 10", 10"', 10"". Bei allen fünf Aufnahmevorrichtungen 10, 10', 10", 10"', 10"" sind die Aufnahmezinken 13 in Zinkengruppen 40 von jeweils zwei bis sechs Aufnahmezinken 13 nebeneinander auf der Trommel 11 angeordnet. Die gruppenweise und radial zueinander versetzte Anordnung egalisiert den für die Rotation der Trommel 11 erforderlichen Antriebsbedarf. Bei rotierender Trommel 11 heben die Aufnahmezinken 13 im Arbeitseinsatz Erntegut vom Boden auf und fördern es an die nachgelagerten Aggregate weiter.

An Stelle der hier dargestellten Aufnahmezinken 13 sind auch andere, vorzugsweise elastische, Zinkensegmente einsetzbar. Das von den Aufnahmezinken 13 im Ernteeinsatz aufgenommene Erntegut wird mit Unterstützung des CFS-Ladeaggregats zum Förderrotor 36 gefördert, mittels der Schneidvorrichtung 33 geschnitten und gelangt schließlich in einen am Ladewagen vorgesehenen Laderaum.

### Erstes Ausführungsbeispiel (Figuren 3 bis 6):

Die Figuren 3 bis 6 zeigen ein erstes Ausführungsbeispiel der Erfindung in Form einer Aufnahmevorrichtung 10. Im dargestellten Ausführungseispiel ist die Trommel 11 aus einem gekanteten Blechzuschnitt hergestellt. Hierdurch ergeben sich auf der Oberfläche des Trommelmantels 12 ebene Abschnitte, auf denen sich sowohl die Aufnahmezinken 13 als auch Gegenwerkzeuge 20 einfach befestigen lassen. Die Aufnahmezinken 13 sind mit zwei Halteblechen 26, 39 auf der Trommel 11 befestigt. An der in Drehrichtung D gesehen vorderen Seite ist das erste Halteblech 26 vorgesehen, welches die vordere Seite des Zinken-Sockels 35 hält. Um den Aufnahmezinken 16 auf der Trommel 11 zu fixieren ist weiterhin an der in Rotationsrichtung D gesehen hinteren Seite des Aufnahmezinkens 16 das Halteblech 39 vorgesehen, welches mit Befestigungsmitteln 19 auf der Trommel 11 fixiert ist. Bei dem dargestellten Ausführungsbeispiel ist das Gegenwerkzeug 20 an die Zinkengruppe 40 angepasst und mit denselben Befestigungsmitteln 19 auf der Trommel 11 befestigt, wie auch die Aufnahmezinken 13. Jeder Zinkengruppe 40 ist ein Gegenwerkzeug 20 mit jeweils vier Teilbereichen 41 zugeordnet.

Hinter der Trommel 11 ist ein Abstreiferkamm 15 angeordnet. Der Abstreiferkamm 15 ist von der Trommel 11 entkoppelt und rotiert nicht. Der Abstreiferkamm 15 dient als Träger für Abstreifer 16, die jeweils in einem freien Ende 18 auslaufen und eine Außenkontur 17 aufweisen. Zwischen den Außenkonturen 17 zweier benachbarter Abstreifer 16 ergeben sich Spalten 42. Im dargestellten Ausführungsbeispiel weisen die freien Enden 18 der Abstreifer 16 jeweils eine sich verjüngende Außenkontur 25 auf. Analog zu den Aufnahmezinken 13 werden auch die Teilbereiche 41 der Gegenwerkzeuge 20 bei Rotation der Trommel 11 durch die Spalten 42 geführt. Im Gegensatz zu den Abstreifern 16, die sich in Richtung Trommelmantel 12 zunehmend verjüngen, weisen die Teilbereiche 41 eine Außenkontur 27 auf, die sich in Richtung Trommelmantel 12 zunehmend verbreitert. Die Enden 18 der Abstreifer 16 liegen bei Rotation der Trommel 12 eng am Trommelmantel 12 an und untergreifen das von den Teilbereichen 41 mitgeführte Erntegut.

Die Gegenwerkzeuge 20 weisen jeweils einen Befestigungsbereich 21 und einen Abstreifbereich 22 auf, die im dargestellten Ausführungsbeispiel durch eine Abkantung 38 miteinander verbunden sind. Der Befestigungsbereich 21 hat eine planebene Kontur 23, die im montierten Zustand an der Oberfläche des Trommelmantels 12 anliegt. Der Abstreifbereich 22 hat eine Kontur 24, die ebenfalls planeben ist, ausgehend von der Abkantung 38 jedoch einen Winkel β zur Kontur 23 und damit zu derjenigen Ebene des Trommelmantels 12 aufweist, auf der das Gegenwerkzeug 20 befestigt ist. Der Winkel β beträgt hier 27°. Das auf der Trommel 11 geförderte Erntegut wird somit vom Abstreifbereich 22 des Gegenwerkzeugs 20 angehoben.

Im dargestellten Ausführungsbeispiel weisen die Enden der Abstreifer 18 Außenseiten 43 auf, die bei Rotation der Trommel 11 in Drehrichtung D spaltlos an Außenseiten 45 der Gegenwerkzeuge 20 entlang gleiten. Die Außenseiten 45 der Gegenwerkzeuge 20 bilden damit erste Scherkanten 30 und die Außenseiten 43 der Abstreifer zweite Scherkanten 31. Gemeinsam fungieren die Scherkanten 30 der Gegenwerkzeuge 20 und die Scherkanten 31 der Abstreifer 16 als Messer und Gegenmesser und zerteilen etwaige bei Rotation der Trommel 11 zwischen diese Scherkanten 30, 31 geratende Erntegutpartikel. Hierdurch werden Materialstauungen verhindert.

Fig. 4 zeigt den in Figur 3 dargestellten Teilbereich in einer Seitenansicht. Der Sockel 35 der Aufnahmezinken 13 wird jeweils durch ein Halteblech 39 gehalten, das, in Drehrichtung D der Trommel 11 gesehen, an seiner Vorderseite mittels eines Vorsprungs in eine Öffnung des Trommelmantels 12 eingesteckt ist und an seiner Rückseite durch eine Schraube, die ein Befestigungsmittel 39 bildet, gehalten wird. Dieses Befestigungsmittel 39 hält nicht nur das Halteblech 39, sondern auch das Gegenwerkzeug 20. Die Aufnahmezinken 13 weisen bezogen auf die Drehachse 46 an ihrem äußersten Rotationspunkt einen Außenradius R2 auf.

Die Außenkontur 27 der Gegenwerkzeuge 20 überragt den Trommelmantel 12. Die äußersten Punkte der Gegenwerkzeuge 20 beschreiben bei Rotation der Trommel 11 eine Umlaufbahn mit einem Außenradius R4. Dieser Außenradius R4 ist kleiner als der Außenradius R2 der Aufnahmezinken 13, jedoch größer als ein Abstand R3, den das Ende 18 der Abstreifer 16 im montierten Zustand gegenüber der Drehachse 46 aufweist. Folglich überragen die Gegenwerkzeuge 20 die Enden 18 der Abstreifer 16. Bei Rotation der Trommel 11 in Drehrichtung D untergreifen die Enden 18 der Abstreifer 16 somit das von den Gegenwerkzeugen 20 geförderte Erntegut.

Die Figuren 5 und 6 zeigen das Gegenwerkzeug 20 im Detail. Wie in Figur 5 gut zu erkennen ist, umfasst der Befestigungsbereich 21 vier Aussparungen 44, durch die im montierten Zustand die Befestigungsmittel 19 gesteckt werden. Im dargestellten Ausführungsbeispiel weisen die Befestigungsbereiche 21 der Gegenwerkzeuge 20 zudem zwei Vorsprünge 28 auf, die zur Aufnahme dieser Vorsprünge 28 im Trommelmantel 12 vorgesehene Öffnungen 29 einsteckbar sind. Die Gegenwerkzeuge 20 sind im montierten Zustand somit mit ihren Vorsprüngen 28 in den Trommelmantel 12 eingesteckt und durch die Befestigungsmitteln 19, die gleichzeitig zur Befestigung der Aufnahmezinken 13 dienen, auf der Trommel fixiert.

Im dargestellten Ausführungsbeispiel sind die Gegenwerkzeuge 20 aus einem Blechzuschnitt hergestellt, da sich die genannten Scherkanten 30 aus einem Blech gut herstellen lassen. Die Gegenwerkzeuge 20 können aber auch aus einem flexiblen Material hergestellt sein, so dass sie sich beim Durchlauf der Abstreifer 16 durch die Konturbereiche 47 verformen und an die Kontur der Abstreifer 16 anpassen können.

Alternativ zu der dargestellten Ausführung eines Gegenwerkzeuges 20 mit vier Teilbereichen 41 könnten an dem Gegenwerkzeug 20 auch weniger oder mehr Teilbereiche 41 vorgesehen sein. Somit ist es beispielsweise auch möglich, jedem einzelnen Aufnahmezinken 13 - oder einer Teilmenge der Aufnahmezinken 13 - jeweils ein separates Gegenwerkzeug mit nur einem einzigen Teilbereich 41 zuzuordnen.

### Zweites Ausführungsbeispiel (Figuren 7 bis 10):

Die Figuren 7 bis 10 zeigen eine Aufnahmevorrichtung 10' mit einer Trommel 11, auf der die Förderzinken 13 durch zwei Haltebleche 26' und 39' gehalten werden. Das in Rotationsrichtung D der Trommel 11 gesehen hintere Halteblech 26' wird durch einen u-förmig in den Trommelmantel 12 eingeschnittenen und dann nach außen hochgebogenen Teilbereich des Trommelmantels 12 ausgebildet. Der hochgebogene Teilabschnitt bildet einen keilförmigen Schuh, in den ein hinterer Teil des Zinkensockels 35 eines Aufnahmezinkens 13 einsteckbar ist. Im montierten Zustand wird ein vorderer Teil des Zinkensockels 35 durch das in Rotationsrichtung D gesehen vordere Halteblech 39' gehalten und der Zinken insgesamt auf der Trommel 11 befestigt.

Die Kontur des Haltebleches 39' wirkt so, dass dieses in Drehrichtung D der Trommel 11 gesehen das zu fördernde Erntegut-Material bei Auftreffen auf dieses Material (im unteren und mittleren Bereich der Trommel 11) zunächst untergreift. Da im Arbeitseinsatz die Umfangsgeschwindigkeit, mit der sich die Trommel 11 dreht, größer ist als die Fahrgeschwindigkeit der Erntemaschine 100, wird von den Aufnahmezinken insbesondere längeres Material aus dem zu ladenden Gut herausgezogen und in Drehrichtung D mitgenommen.

Beobachtungen des Materialflusses haben gezeigt, dass insbesondere längeres Material sich dabei U-förmig um die Aufnahmezinken 13 legt und aufgrund der höheren Umfangsgeschwindigkeit der Trommel 11 aus dem Gutfluss herausgezogen wird. Dabei wird die U-förmige Schlaufe immer enger gezogen und das Erntegut in Richtung auf die Spitze des Aufnahmezinkens 13 bewegt.

Das Halteblech 39' umfasst einen Abstreifbereich 22', der eine Art Stufe ausbildet. Beim Abstreifen des Ernteguts von den Aufnahmezinken 13 bei in Drehrichtung D rotierender Trommel 11 beginnt, wenn die Enden 18 der Abstreifer 16 in den Bereich der genannten Stufe gelangen. Wenn das Material über die genannte Stufe hinwegrutscht, wird es von dem Abstreifer 16 von unten untergriffen. Selbstverständlich wirkt dieser Abstreifvorgang umso besser, je formkompatibler über den Bewegungsbereich (Drehbereich der Trommel 11) die Kanten des Abstreifers 16 an die Kanten der Haltbleche 39' angepasst sind.

Das Halteblech 39' bildet gleichzeitig ein Gegenwerkzeug 20'. Es umfasst einen Befestigungsbereich 21' und den bereits genannten Abstreifbereich 22'. Der Befestigungsbereich 21' weist einen Vorsprung 28' und eine darin eingebrachte Gewindebohrung 50 auf. Zur Montage des Halteblechs 39' wird der Vorsprung 28' durch eine in der Trommel 11 eingebrachte Öffnung 29 in das Innere der Trommel 11 eingesteckt. Der Vorsprung 28' wird so in die Trommel 11 eingesteckt, dass die Gewindebohrung 50 mit einer in der Trommel vorgesehenen Bohrung koinzidiert, so dass eine Schraube (Befestigungsmittel 19) von außen durch den Trommelmantel 12 in die Gewindebohrung 50 eindrehbar ist. Im mittleren Bereich des Halteblechs 39' ist eine Abkantung 38' mit einem Winkel ß vorgesehen. Der Winkel β ist gleichzeitig der Winkel, in dem sich der Abstreifbereich 22` im montierten Zustand des Halteblechs 29' vom Trommelmantel 12 abhebt.

Mittels der Befestigungsmittels 19, hier einer Schraube, wird der Vorsprung 28 des Halteblechs 29' mit seiner oberen Kontur 23' an den Trommelmantel 12 herangezogen. Gleichzeitig wird der aus der Trommel 11 herausragende Abstreifbereich 22' des Halteblechs 39' wippenartig auf den Sockel 35 des Aufnahmezinkens 13 gepresst. Der Sockel 35 umfasst im dargestellten Ausführungsbeispiel einen Vorsprung 53, der formschlüssig in eine Öffnung 52 des Halteblechs 39' eingreift und etwaige im Arbeitseinsatz auf den Förderzinken 13 einwirkende Querkräfte kompensiert.

Der Abstreifbereich 22' des Halteblechs 39' weist zwei äußere Konturbereiche 24' auf, die jeweils eine erste Scherkante 30' ausbilden. Die Scherkanten 30' reichen im montierten Zustand bis an den Trommelmantel 12 heran. Mittels der Scherkanten 30' fungiert das Halteblech 39' als Gegenwerkzeug 20' für die bei Rotation der Trommel 11 an den Scherkanten 30' vorbeigeführten Abstreifer 16. Die Abstreifer 16 weisen, analog zum ersten Ausführungsbeispiel, zweite Scherkanten 31 auf. Ebenfalls analog zum ersten Ausführungsbeispiel reichen die Enden 18 der Abstreifer 16 bis an den Trommelmantel 12 heran. Bei Rotation der Trommel 11 in Drehrichtung D ergibt sich so zwischen den ersten Scherkante 30' der Gegenwerkzeuge 20' und den zweiten Scherkanten 31' der Abstreifer 16' ein ziehender Schnitt.

### Drittes Ausführungsbeispiel (Figuren 11 bis 14)

In einem dritten Ausführungsbeispiel wird eine Aufnahmevorrichtung 10" vorgeschlagen, bei der die Aufnahmezinken 13 an ihrer in Rotationsrichtung D gesehen vorderen Seite durch ein Halteblech 39" gehalten werden, das schmaler ist als der Sockel 35 der Aufnahmezinken 13. Bei diesem Ausführungsbeispiel werden etwaige im Arbeitseinsatz wirkende Querkräfte dadurch kompensiert, dass der Sockel 35 eine Nut 56 umfasst, in die ein am Befestigungsbereich 22" des Halteblechs 22" vorgesehener Steg 55 formschlüssig eingreift. Die Befestigung des Halteblechs 39" - und damit die Fixierung des Aufnahmezinkens 13 insgesamt - erfolgt analog zum ersten und zweiten Ausführungsbeispiel, indem ein Halteblech, hier das Halteblech 39", mit seinem Vorsprung 28" in eine im Trommelmantel 12 vorgesehene Öffnung 29 eingesteckt und mit einem Befestigungsmittel 19, bei dem es sich wiederum um eine Schraube handelt, fixiert wird.

Im Gegensatz zum zweiten Ausführungsbeispiel werden Scherkanten 30" jedoch nicht durch das Halteblech 39" ausgebildet, sondern durch die Außenkanten des Zinkensockels 35. Im Arbeitseinsatz werden die Scherkanten 30" des Zinkensockels 35 somit an den zweiten Scherkanten 31 der Abstreifer 16 entlanggeführt, so dass, analog zu den ersten beiden Ausführungsbeispielen, der Erntegutfluss verbessert wird. Um die Standzeit der verschleißgefährdeten Scherkanten 30" zu erhöhen, können an den Außenkanten des Sockels 35 Verstärkungen (nicht dargestellt) vorgesehen sein. Bei den Verstärkungen kann es sich beispielsweise um Stahlschienen handeln, die in am Sockel 35 vorgesehene Nuten einlegbar oder auf die Sockel-Außenkanten aufklebbar sein können.

### Viertes Ausführungsbeispiel (Figuren 15 bis 18)

In einem vierten Ausführungsbeispiel wird eine Aufnahmevorrichtung 10"' vorgeschlagen, bei der die Aufnahmezinken 13 an ihrer in Rotationsrichtung D gesehen vorderen Seite durch ein Halteblech 39'" gehalten werden, dessen Abstreifbereich 22‴ einen Steg 55 umfasst, der - analog zur in Figur 13 dargestellten dritten Ausführungsform - im montierten Zustand formschlüssig in eine am Zinkensockel 35 vorgesehene Nut 56 eingreift und so den Aufnahmezinken 13 fixiert und etwaige auf den Zinken einwirkende Querkräfte kompensiert.

Die Befestigung des Halteblechs 39'" - und damit die Fixierung des Aufnahmezinkens 13 insgesamt - erfolgt analog zu den zuvor genannten Ausführungsbeispielen, indem ein Halteblech, hier das Halteblech 39"', mit seinem Vorsprung 28'" in eine im Trommelmantel 12 vorgesehene Öffnung 29 eingesteckt und mit einem Befestigungsmittel 19, bei dem es sich wiederum um eine Schraube handelt, fixiert wird.

Im Gegensatz zum dritten Ausführungsbeispiel geht der Abstreifbereich 22'" des Gegenwerkzeugs 20'" im Anschluss an den Steg 55 in einen Bereich über, der den Sockel des Zinkens 13 überragt und eine Kontur 24'" mit zwei äußeren ersten Scherkanten 30‴ ausbildet.

Mittels der ersten Scherkanten 30'" fungiert das Halteblech 39'" als Gegenwerkzeug 20‴ für die bei Rotation der Trommel 11 an den Scherkanten 30'" vorbeigeführten Abstreifer 16. Die Abstreifer 16 weisen, analog zum ersten Ausführungsbeispiel, zweite Scherkanten 31 auf. Die ersten Scherkanten 30'" des Gegenwerkzeugs 20'" verjüngen sich konisch nach außen hin. Die zweiten Scherkanten 31 der Abstreifer 16 verbreitern sich konisch nach außen hin, und zwar abgestimmt auf die Verjüngung der Scherkanten 30'". Das heißt: Die Scherkanten 30'" und 31 gleiten bei Rotation der Trommel 11 vorzugsweise spaltlos aneinander entlang, schneiden gegebenenfalls Erntegut, das in den Bereich zwischen die Scherkanten gelangt und verbessern so den Erntegutfluss insgesamt.

### Fünftes Ausführungsbeispiel (Figuren 19 bis 22)

Ein fünftes Ausführungsbeispiel betrifft eine Aufnahmevorrichtung 10"", die mit Halteblechen 39"" an der Trommel 11 befestigte Aufnahmezinken 13 aufweist. Der Aufbau, die Montage und die Funktion der Haltebleche 39"" ähnelt weitgehend dem Aufbau, der Montage und der Funktion der Haltebleche 39' (zweites Ausführungsbeispiel). Analog zum zweiten Ausführungsbeispiel werden auch beim vierten Ausführungsbeispiel erste Scherkanten 30ʺʺ durch äußere Konturen 24"" der Haltebleche ausgebildet. Im Unterschied zum zweiten Ausführungsbeispiel reichen die ersten Scherkanten 30"" jedoch nicht bis an den Trommelmantel 12 heran, sondern lediglich bis zu einer Kontaktstelle 54 zweier benachbarter Haltebleche 39"". Wie insbesondere in Figur 15 gut zu erkennen ist, bilden die Kontaktstellen 54 erhöhte Übergänge für die Abstreifer 16. Die Enden 18 der Abstreifer 16 reichen bei diesem Ausführungsbeispiel somit nicht bis an den Trommelmantel 12 heran, sondern sind von der Oberfläche der Trommel 11 beabstandet.

Die dargestellten Ausführungsbeispiele - und damit die Aufnahmevorrichtungen 10; 10', 10", 10'" und 10"" - unterscheiden sich somit durch die Art und den Aufbau der jeweils vorgesehenen Gegenwerkzeuge 20, 20', 20", 20'" und 20"". Da die Aufnahmevorrichtungen 10; 10', 10", 10'" und 10"" vorzugsweise eine Vielzahl von Gegenwerkzeuge 20, 20`, 20", 20'" und 20"" umfassen, ist es auch möglich, unterschiedliche Ausführungen von Gegenwerkzeugen 20, 20', 20", 20‴ und 20"" an einer Aufnahmevorrichtung zu kombinieren um die Aufnahmevorrichtung an besondere Erntebedingungen oder Erntegutarten anzupassen.

### Bezugszeichenliste

- 10, 10', 10", 10‴, 10"": Aufnahmevorrichtung
- 11: Trommel
- 12: Trommelmantel
- 13: Aufnahmezinken
- 14: Schenkel (von 13)
- 15: Abstreifkamm
- 16: Abstreifer
- 17: Außenkontur (von 16)
- 18: Ende (von 16)
- 19: Befestigungsmittel
- 20, 20', 20", 20"', 20"": Gegenwerkzeug
- 21, 21', 21", 21'", 21"": Befestigungsbereich (von 20, 20', 20" 20'", 20"")
- 22, 22', 22", 22‴, 22"": Abstreifbereich (von 20, 20', 20", 20'", 20"")
- 23, 23', 23", 23'", 23"": Kontur (von 21, 21 `, 21", 21"', 21ʺʺ)
- 24, 24', 24", 24'", 24ʺʺ: Kontur (von 22, 22', 22", 22"', 22"")
- 25: Außenkontur (von 18)
- 26, 26', 26", 26'", 26"": Halteblech
- 27, 27', 27", 27'", 27"": Außenkontur (von 20, 20', 20", 20'", 20"")
- 28, 28`, 28", 28'", 28ʺʺ: Vorsprung (von 20, 20', 20", 20'", 20"")
- 29: Öffnung (in 12)
- 30, 30', 30", 30'", 30"": erste Scherkante (an 20, 20', 20", 20'", 20"")
- 31: zweite Scherkante (an 16)
- 32: Antriebswelle
- 33: Schneidvorrichtung
- 34: Zuführwalze
- 35: Sockel
- 36: Förderrotor
- 37: Tastrad
- 38, 38', 38", 38'", 38"": Abkantung
- 39, 39`, 39", 39‴, 39"": Halteblech
- 40: Zinkengruppe
- 41: Teilbereich (von 20)
- 42: Spalt
- 43: Außenseite
- 44: Aussparung
- 45: Außenseite (von 20, 20', 20", 20'", 20"")
- 46: Drehachse
- 47: Konturbereich (von 20)
- 48: -
- 49: -
- 50: Gewindebohrung
- 51: Blechzuschnitt (von 12)
- 52: Öffnung (an 20', 20'")
- 53: Vorsprung (an 13)
- 54: Kontaktstelle
- 55: Steg (an 39", 39‴);
- 56: Nut (in 35)
- 57: ebener Abschnitt (von 12)

- 100: Erntemaschine

- ß: Winkel

- D: Drehrichtung
- R1: Außenradius (von 11)
- R2: Außenradius (von 13)
- R3: Abstand (von 16 zu 46)
- R4: Außenradius (von 20, 20', 20", 20'", 20"")
- R5: Radius (von 16)

## Patentansprüche

1. Aufnahmevorrichtung (10; 10'; 10"; 10"'; 10"") an einer Erntemaschine (100), wie einem Ladewagen, einer Ballenpresse oder einem Feldhäcksler oder einer Heuwerbemaschine, umfassend:
- eine antreibbare Trommel (11) mit einer Drehachse (46) und mit einem Trommelmantel (12), welcher einen Außenradius (R1) aufweist,
- auf der Trommel (11) angeordnete Aufnahmezinken (13), deren Schenkel (14) den Außenradius (R1) der Trommel (11) nach außen überragen und die gegenüber der Drehachse (46) einen Außenradius (R2) aufweisen und bei rotierender Trommel (11) Erntegut, vorzugsweise Halm- und Blattgut, vom Boden aufnehmen,
- einen Abstreifkamm (15) mit darauf angeordneten Abstreifern (16), die eine Abstreifer-Außenkontur (17) aufweisen und in einem freien Ende (18) auslaufen, wobei das freie Ende (18) gegenüber der Drehachse (46) einen Abstand (R3) aufweist, der gleich groß oder größer ist als der Außenradius (R1) der Trommel (11), so dass das freie Ende (18) sich bei rotierender Trommel (11) an die radiale Umfangskontur des Trommelmantels (12) anschmiegt,
wobei die Trommel (11) aus einem gekanteten Blechzuschnitt (51 hergestellt ist und ebene Abschnitte (57) zur Anbringung der Aufnahmezinken (13) umfasst,
**dadurch gekennzeichnet, dass**
auf der Trommel (11) wenigstens ein Gegenwerkzeug (20; 20'; 20"; 20'"; 20"") angeordnet ist, das eine Außenkontur (27, 27'; 27"; 27‴; 27"") aufweist, die im montierten Zustand einen Außenradius (R4) gegenüber der Drehachse (46) aufweist,
- der größer ist als der Abstand (R3) des freien Endes (18) der Abstreifer (16) zur Drehachse (46)
- und kleiner ist als der Außenradius (R2) der Aufnahmezinken (13),
so dass zumindest ein Teilbereich des Gegenwerkzeuges (20; 20'; 20"; 20'"; 20"") bei rotierender Trommel (11) an zumindest einem Teilbereich der Abstreifer-Außenkontur (17) entlang gleitet und die Abnahme des von den Aufnahmezinken (13) aufgenommenen Erntegutes durch die Abstreifer (16) unterstützt.

2. Aufnahmevorrichtung (10; 10'; 10"; 10'"; 10"") nach Anspruch 1, **dadurch gekennzeichnet, dass** das Gegenwerkzeug (20; 20'; 20"; 20‴; 20"") mit Befestigungsmitteln (19) lösbar auf dem Trommelmantel (12) anbringbar ist.

3. Aufnahmevorrichtung (10; 10'; 10"; 10'"; 10"") nach Anspruch 1 oder 2, **dadurch gekennzeichnet, dass** die Aufnahmezinken (13) und die Gegenwerkzeuge (20; 20'; 20"; 20‴; 20"") mit denselben Befestigungsmitteln (19) auf der Trommel (11) befestigt sind.

4. Aufnahmevorrichtung (10; 10'; 10"; 10'"; 10"") nach einem der Ansprüche 1 bis 3, **dadurch gekennzeichnet, dass** das Gegenwerkzeug (20; 20'; 20"; 20'"; 20"") einen Befestigungsbereich (21; 21'; 21"; 21"'; 21"") und einen an den Befestigungsbereich (21; 21'; 21"; 21"'; 21ʺʺ) angrenzenden Abstreifbereich (22; 22'; 22"; 22"'; 22"") aufweist, wobei:
- eine im montierten Zustand zum Trommelmantel (12) weisende Kontur (23; 23'; 23"; 23"'; 23"") des Befestigungsbereiches (21; 21'; 21"; 21‴; 23"") im montierten Zustand am Trommelmantel (12) anliegt
- und eine im montierten Zustand zum Trommelmantel (12) weisende Kontur (24; 24'; 24"; 24"'; 24"") des Abstreifbereiches (22; 22'; 22"; 22'"; 22ʺʺ) sich in einem Winkel (β) gegenüber dem Trommelmantel (12) anhebt.

5. Aufnahmevorrichtung (10; 10'; 10"; 10'"; 10"") nach Anspruch 4, **dadurch gekennzeichnet, dass** der Winkel (β) zwischen dem Abstreifbereich (22; 22'; 22"; 22"'; 22"") des Gegenwerkzeuges (20; 20'; 20"; 20"'; 20"") und dem Trommelmantel (12) vorzugsweise 5° bis 50°, höchst vorzugsweise 20° bis 30° beträgt.

6. Aufnahmevorrichtung (10; 10'; 10"; 10"'; 10"") nach einem der Ansprüche 1 bis 5, **dadurch gekennzeichnet, dass**
- das freie Ende (18) der Abstreifer (16) eine Außenkontur (25) aufweist, die sich in Richtung Trommelmantel (12) verjüngt,
- der Abstreifbereich (22; 22'; 22"; 22"'; 22ʺʺ) des Gegenwerkzeugs (20; 20'; 20"; 20'"; 20"") eine Außenkontur (27; 27'; 27"; 27"'; 27"") aufweist, die sich in Richtung Trommelmantel (12) verbreitert,
so dass bei rotierender Trommel (11) die sich verjüngende Außenkontur (25) des freien Endes (18) der Abstreifer (16) an der sich verbreiternden Außenkontur (27; 27'; 27"; 27‴; 27"") des Gegenwerkzeuges (20; 20'; 20"; 20"'; 20"") entlanggleitet.

7. Aufnahmevorrichtung (10, 10', 10", 10'"; 10ʺʺ) nach einem der Ansprüche 1 bis 6, **dadurch gekennzeichnet, dass** das Gegenwerkzeug (20; 20'; 20"; 20‴; 20"") und/oder das Halteblech (39; 39'; 39"; 39'") wenigstens einen Vorsprung (28; 28'; 28"; 28"'; 28"") umfasst, der im montierten Zustand in eine im Trommelmantel (12) vorgesehene und zu dem Vorsprung (28; 28'; 28"; 28"'; 28"") kompatible Öffnung (29) eingreift.

8. Aufnahmevorrichtung (10; 10'; 10"; 10'"; 10"") nach einem der Ansprüche 1 bis 7, **dadurch gekennzeichnet, dass** das Gegenwerkzeug (20; 20'; 20"; 20‴; 20"") wenigstens eine erste Scherkante (30; 30'; 30"; 30'"; 30"") aufweist und der Abstreifer (16) wenigstens eine zweite Scherkante (31) aufweist und die Scherkanten (30; 30'; 30"; 30'"; 30"") und (31) bei rotierender Trommel (11) als Messer und Gegenmesser fungieren und etwaiges zwischen die Scherkanten (30; 30'; 30"; 30"'; 30"") und (31) geratendes Erntegut abscheren.

9. Aufnahmevorrichtung (10; 10'; 10"; 10'"; 10"") nach einem der Ansprüche 1 bis 8, **dadurch gekennzeichnet, dass** das Gegenwerkzeug (20; 20'; 20"; 20‴; 20"") einen rechteckigen, gerundeten oder trapezartigen Konturbereich (47) umfasst, welcher an die Kontur des freien Endes (18) der Abstreifer (16) angepasst ist, so dass das Gegenwerkzeug (20; 20'; 20"; 20"'; 20"") bei Rotation der Trommel (11) wenigstens an einem Teilbereich des Konturbereiches (47; 47'; 47"; 47'"; 47"") entlanggleitet.

10. Aufnahmevorrichtung (10; 10'; 10"; 10'"; 10"") nach Anspruch 9, **dadurch gekennzeichnet, dass** das Gegenwerkzeug (20; 20'; 20"; 20"'; 20"") aus einem flexiblen Material hergestellt ist, welches sich bei Rotation der Trommel (11) an den das Gegenwerkzeug (20; 20'; 20"; 20‴) kontaktierenden Konturbereich (47; 47'; 47"; 47'"; 47"") des Abstreifers (16) anpasst.

11. Aufnahmevorrichtung (10; 10'; 10"; 10'"; 10"") nach einem der Ansprüche 1 bis 10, **dadurch gekennzeichnet, dass** das Gegenwerkzeug (20'; 20"; 20‴; 20"") und/oder das Halteblech (39, 39'; 39"; 39"') eine Klemme zur Befestigung wenigstens eines Aufnahmezinkens (13) bildet und vorzugsweise je ein Halteblech (39, 39'; 39"; 39'"; 39"") zur Befestigung je eines Aufnahmezinkens (13) vorgesehen ist.

12. Aufnahmevorrichtung (10; 10'; 10"; 10‴; 10"") nach einem der Ansprüche 1 bis 11, **dadurch gekennzeichnet, dass** das Gegenwerkzeug (20'; 20"; 20"'; 20"") eine Öffnung (52) zur Aufnahme eines am Förderzinken (13) ausgebildeten Vorsprungs (53) umfasst.

13. Aufnahmevorrichtung (10"") nach einem der Ansprüche 1 bis 12, **dadurch gekennzeichnet, dass** zwei benachbarte Gegenwerkzeuge (20"") einander kontaktieren und eine Kontaktstelle (54) mit einem gegenüber dem Trommelradius (R1) größeren Radius (R5) ausbilden und die Enden (18) der Abstreifer (16) bei Rotation der Trommel (11) gegenüber dem Trommelmantel (12) um den Betrag beabstandet sind, der sich aus der Differenz der Radien (R5) und (R1) ergibt.

14. Aufnahmevorrichtung (10") nach einem der Ansprüche 1 bis 13, **dadurch gekennzeichnet, dass**
- das Gegenwerkzeug (20") durch den Aufnahmezinken (13) ausgebildet wird, wobei der Aufnahmezinken (13) wenigstens eine Außenkante aufweist, die die erste Scherkante (30") bildet,
- wenigstens eine der an einem der Abstreifer (16) ausgebildeten zweiten Schneidkanten (31) bei rotierender Trommel (11) an der Außenkante (53) des Aufnahmezinkens (13) entlanggleitet,
so dass Abstreifer (16) und Aufnahmezinken (13) als Werkzeug und Gegenwerkzeug zusammenwirken und die Abnahme des von den Aufnahmezinken (13) aufgenommenen Erntegutes durch die Abstreifer (16) unterstützen.

15. Erntemaschine (100) umfassend eine Aufnahmevorrichtung (10; 10'; 10"; 10'"; 10"") nach einem der Ansprüche 1 bis 14.

## Claims

1. Pick-up device (10; 10'; 10"; 10'"; 10"") on a harvesting machine (100), such as a loader wagon, a baler or a forage harvester or a hay making machine, comprising:
- a drivable drum (11) having an axis of rotation (46) and having a drum shell (12) which has an outer radius (R1),
- pick-up tines (13) arranged on the drum (11), the legs (14) of which project outwards beyond the outer radius (R1) of the drum (11) and which have an outer radius (R2) opposite the axis of rotation (46) and pick up crop material, preferably stalk and leaf material, from the ground when the drum (11) is rotating,
- a scraper comb (15) with scrapers (16) arranged thereon, which have a scraper outer contour (17) and end in a free end (18), the free end (18) having a distance (R3) from the axis of rotation (46) which is equal to or greater than the outer radius (R1) of the drum (11), so that the free end (18) adapts to the radial circumferential contour of the drum shell (12) when the drum (11) is rotating,
wherein the drum (11) is made from a folded sheet metal blank (51) and comprises flat sections (57) for mounting the receiving tines (13),
**characterised in that** at least one counter-tool (20; 20'; 20"; 20‴; 20"") is arranged on the drum (11), which counter-tool (20; 20'; 20'"; 20"") has an outer contour (27, 27'; 27"; 27'"; 27"") which, in the assembled state, has an outer radius (R4) relative to the axis of rotation (46),
- which is greater than the distance (R3) of the free end (18) of the wiper (16) from the axis of rotation (46)
- and smaller than the outer radius (R2) of the receiving tines (13),
so that at least a partial region of the counter tool (20; 20'; 20"; 20'"; 20"") slides along at least a partial region of the scraper outer contour (17) when the drum (11) is rotating and assists the removal of the crop received by the pick-up tines (13) by the scrapers (16).

2. Pick-up device (10; 10'; 10"; 10'"; 10"") according to claim 1, **characterised in that** the counter-tool (20; 20'; 20"; 20‴; 20"") is detachably mountable on the drum shell (12) by fastening means (19).

3. Pick-up device (10; 10'; 10"; 10'"; 10"") according to claim 1 or 2, **characterised in that** the pick-up tines (13) and the counter-tools (20; 20'; 20"; 20'"; 20"") are fastened to the drum (11) by the same fastening means (19).

4. Pick-up device (10; 10'; 10"; 10'"; 10"") according to any one of claims 1 to 3, **characterized in that** the counter-tool (20; 20'; 20"; 20'"; 20"") comprises a fastening region (21; 21'; 21"; 21‴; 21"") and a stripping region (22; 22'; 22"; 22'"; 22"") adjacent to the fastening region (21; 21'; 21"; 21"'; 21""), wherein:
- a contour (23; 23'; 23"; 23'"; 23"") of the fastening region (21; 21'; 21"; 21'"; 23"") facing the drum shell (12) in the assembled state bears against the drum shell (12) in the assembled state
- and a contour (24; 24'; 24"; 24'"; 24"") of the stripping region (22; 22'; 22"; 22‴; 22"") facing the drum shell (12) in the assembled state is raised at an angle (β) relative to the drum shell (12).

5. Pick-up device (10; 10'; 10"; 10'"; 10"") according to claim 4, **characterized in that** the angle (β) between the stripping region (22; 22'; 22"; 22'"; 22"") of the counter-tool (20; 20'; 20"; 20'"; 20"") and the drum shell (12) is preferably 5° to 50°, most preferably 20° to 30°.

6. Pick-up device (10; 10'; 10"; 10‴; 10"") according to one of claims 1 to 5, **characterized in that**
- the free end (18) of the stripper (16) has an outer contour (25) which tapers towards the drum shell (12),
- the stripper region (22; 22'; 22"; 22'"; 22"") of the counter-tool (20; 20'; 20"; 20'"; 20"") has an outer contour (27; 27'; 27"; 27'"; 27"") which widens in the direction of the drum shell (12),
so that, when the drum (11) is rotating, the tapering outer contour (25) of the free end (18) of the stripper (16) slides along the widening outer contour (27; 27'; 27"; 27'"; 27"") of the counter-tool (20; 20'; 20"; 20'"; 20"").

7. Pick-up device (10; 10'; 10"; 10‴; 10"") according to any one of claims 1 to 6, **characterized in that** the counter-tool (20; 20'; 20"; 20'"; 20"") and/or the holding plate (39; 39'; 39"; 39") comprises at least one projection (28; 28'; 28"; 28'"; 28"") which, in the assembled state, engages in an opening (29) provided in the drum shell (12) and compatible with the projection (28; 28'; 28'"; 28"").

8. Pick-up device (10; 10'; 10"; 10'"; 10"") according to any one of claims 1 to 7, **characterized in that** the counter-tool (20; 20'; 20"; 20‴; 20"") comprises at least a first shearing edge (30; 30'; 30"; 30'"; 30"") and the stripper (16) has at least one second shearing edge (31) and the shearing edges (30; 30'; 30"; 30'"; 30"") and (31) act as a knife and counter-knife when the drum (11) is rotating and shear off any crop which gets between the shearing edges (30; 30'; 30"; 30'"; 30"") and (31).

9. Pick-up device (10; 10'; 10"; 10'"; 10"") according to any one of claims 1 to 8, **characterised in that** the counter-tool (20; 20'; 20"; 20‴; 20"") comprises a rectangular, rounded or trapezoidal contour region (47) which is adapted to the contour of the free end (18) of the strippers (16), so that the counter-tool (20; 20'; 20"; 20'"; 20"") slides along at least a part of the contour region (47; 47'; 47"; 47'"; 47"") during rotation of the drum (11).

10. Pick-up device (10; 10'; 10"; 10'"; 10"") according to claim 9, **characterized in that** the counter-tool (20; 20'; 20"; 20'"; 20"") is made of a flexible material which, upon rotation of the drum (11), adapts to the contour region (47; 47'; 47"; 47‴; 47"") of the scraper (16) contacting the counter-tool (20; 20'; 20"; 20'").

11. Pick-up device (10; 10'; 10"; 10'"; 10"") according to one of claims 1 to 10, **characterised in that** the counter tool (20'; 20"; 20'"; 20"") and/or the holding plate (39, 39'; 39"; 39'") forms a clamp for fastening at least one receiving tine (13) and preferably one holding plate (39, 39'; 39"; 39'"; 39"") is provided for fastening each receiving tine (13).

12. Pick-up device (10; 10'; 10"; 10‴; 10"") according to one of claims 1 to 11, **characterised in that** the counter-tool (20'; 20"; 20'"; 20"") comprises an opening (52) for receiving a projection (53) formed on the conveyor tine (13).

13. Pick-up device (10"") according to one of claims 1 to 12, **characterised in that** two adjacent counter-tools (20"") contact each other and form a contact point (54) with a radius (R5) which is larger than the drum radius (R1), and the ends (18) of the strippers (16) are spaced apart from the drum shell (12) during rotation of the drum (11) by the amount which results from the difference between the radii (R5) and (R1).

14. Pick-up device (10") according to one of claims 1 to 13, **characterised in that**
- the counter tool (20") is formed by the pick-up tine (13), the pick-up tine (13) having at least one outer edge forming the first shearing edge (30"),
- at least one of the second cutting edges (31) formed on one of the strippers (16) slides along the outer edge (53) of the receiving tine (13) when the drum (11) is rotating,
so that stripper (16) and pick-up tine (13) cooperate as a tool and counter-tool and assist the removal by the stripper (16) of the crop picked up by the pick-up tine (13).

15. Harvester (100) comprising a pick-up device (10; 10'; 10"; 10'"; 10"") according to any one of claims 1 to 14.

## Revendications

1. Dispositif de ramassage (10; 10'; 10"; 10'"; 10"") sur une machine de récolte (100), telle qu'une remorque autochargeuse, une presse à balles ou une ensileuse ou une machine de fenaison, comprenant :
- un tambour (11) pouvant être entraîné avec un axe de rotation (46) et avec une enveloppe de tambour (12) qui présente un rayon extérieur (R1),
- des dents de ramassage (13) disposées sur le tambour (11), dont les branches (14) dépassent vers l'extérieur le rayon extérieur (R1) du tambour (11) et qui présentent un rayon extérieur (R2) par rapport à l'axe de rotation (46) et qui ramassent la récolte, de préférence les tiges et les feuilles, sur le sol lorsque le tambour (11) est en rotation,
- un peigne racleur (15) sur lequel sont disposés des racleurs (16) qui présentent un contour extérieur de racleur (17) et se terminent par une extrémité libre (18), l'extrémité libre (18) présentant par rapport à l'axe de rotation (46) une distance (R3) qui est égale ou supérieure au rayon extérieur (R1) du tambour (11), de sorte que l'extrémité libre (18) s'adapte au contour périphérique radial de l'enveloppe de tambour (12) lorsque le tambour (11) tourne,
le tambour (11) étant fabriqué à partir d'un flan de tôle plié (51) et comprenant des sections planes (57) pour la mise en place des dents de réception (13),
**caractérisé en ce que** sur le tambour (11) est disposé au moins un contre-outil (20; 20'; 20"; 20'"; 20"") qui présente un contour extérieur (27, 27'; 27"; 27'"; 27"") qui, à l'état monté, présente un rayon extérieur (R4) par rapport à l'axe de rotation (46),
- qui est plus grand que la distance (R3) de l'extrémité libre (18) des racleurs (16) par rapport à l'axe de rotation (46)
- et plus petit que le rayon extérieur (R2) des dents de réception (13),
de sorte qu'au moins une zone partielle du contre-outil (20; 20'; 20"; 20'"; 20"") glisse le long d'au moins une zone partielle du contour extérieur des racleurs (17) lorsque le tambour (11) est en rotation et favorise l'enlèvement par les racleurs (16) du produit récolté ramassé par les dents de ramassage (13).

2. Dispositif de ramassage (10; 10'; 10"; 10'"; 10"") selon la revendication 1, **caractérisé en ce que** le contre-outil (20; 20'; 20"; 20'"; 20"") peut être monté de manière amovible sur l'enveloppe du tambour (12) par des moyens de fixation (19).

3. Dispositif de ramassage (10; 10'; 10"; 10'"; 10"") selon la revendication 1 ou 2, **caractérisé en ce que** les dents de ramassage (13) et les contre-outils (20; 20'; 20"; 20'"; 20"") sont fixés sur le tambour (11) par les mêmes moyens de fixation (19).

4. Dispositif de ramassage (10; 10'; 10"; 10'"; 10"") selon l'une des revendications 1 à 3, **caractérisé en ce que** le contre-outil (20; 20'; 20"; 20'"; 20"") comporte une zone de fixation (21; 21'; 21"; 21‴; 21"") et une zone de raclage (22; 22'; 22"; 22'"; 22"") adjacente à la zone de fixation (21; 21'; 21"; 21"'; 21""), dans laquelle :
- un contour (23; 23'; 23"; 23"'; 23"") de la zone de fixation (21; 21'; 21"; 21'"; 23"") orienté vers l'enveloppe du tambour (12) à l'état monté est en contact avec l'enveloppe du tambour (12) à l'état monté
- et un contour (24; 24'; 24"; 24'"; 24"") de la zone de raclage (22; 22'; 22"; 22'"; 22""), orienté vers l'enveloppe du tambour (12) à l'état monté, se soulève selon un angle (β) par rapport à l'enveloppe du tambour (12).

5. Dispositif de ramassage (10; 10'; 10"; 10'"; 10"") selon la revendication 4, **caractérisé en ce que** l'angle (β) entre la zone de raclage (22; 22'; 22"; 22'"; 22"") du contre-outil (20; 20'; 20"; 20'"; 20"") et l'enveloppe du tambour (12) est de préférence de 5° à 50°, de préférence encore de 20° à 30°.

6. Dispositif de réception (10; 10'; 10"; 10'"; 10"") selon l'une des revendications 1 à 5, **caractérisé en ce que**
- l'extrémité libre (18) des racleurs (16) présente un contour extérieur (25) qui se rétrécit en direction de l'enveloppe du tambour (12),
- la zone de raclage (22; 22'; 22"; 22'"; 22"") du contre-outil (20; 20'; 20"; 20'"; 20"") présente un contour extérieur (27; 27'; 27"; 27'"; 27"") qui s'élargit en direction de l'enveloppe du tambour (12),
de sorte que, lorsque le tambour (11) tourne, le contour extérieur (25) de l'extrémité libre (18) du racleur (16), qui se rétrécit, glisse le long du contour extérieur (27; 27'; 27"; 27'"; 27"") du contre-outil (20; 20'; 20"; 20'"; 20""), qui s'élargit.

7. Dispositif de réception (10, 10', 10", 10'"; 10"") selon l'une des revendications 1 à 6, **caractérisé en ce que** le contre-outil (20; 20'; 20"; 20'"; 20"") et/ou la tôle de maintien (39; 39'; 39"; 39'") comprend au moins une saillie (28; 28'; 28"; 28'"; 28"") qui, à l'état monté, s'engage dans une ouverture (29) prévue dans la virole (12) du tambour et compatible avec la saillie (28; 28'; 28"; 28"'; 28"").

8. Dispositif de réception (10; 10'; 10"; 10'"; 10"") selon l'une des revendications 1 à 7, **caractérisé en ce que** le contre-outil (20; 20'; 20"; 20'"; 20"") comporte au moins une première arête de cisaillement (30; 30'; 30"; 30'"; 30"") et le racleur (16) présente au moins une deuxième arête de cisaillement (31) et les arêtes de cisaillement (30; 30'; 30"; 30'"; 30"") et (31) font office de couteau et de contre-couteau lorsque le tambour (11) est en rotation et cisaillent tout produit récolté qui se trouve entre les arêtes de cisaillement (30; 30'; 30"; 30'"; 30"") et (31).

9. Dispositif de ramassage (10; 10'; 10"; 10'"; 10"") selon l'une des revendications 1 à 8, **caractérisé en ce que** le contre-outil (20; 20'; 20"; 20'"; 20"") comprend une zone de contour (47) rectangulaire, arrondie ou trapézoïdale, adaptée au contour de l'extrémité libre (18) des racleurs (16), de sorte que le contre-outil (20; 20'; 20"; 20'"; 20"") glisse le long d'au moins une zone partielle de la zone de contour (47; 47'; 47"; 47'"; 47"") lors de la rotation du tambour (11).

10. Dispositif de réception (10; 10'; 10"; 10'"; 10"") selon la revendication 9, **caractérisé en ce que** le contre-outil (20; 20'; 20"; 20'"; 20"") est fabriqué dans un matériau flexible qui, lors de la rotation du tambour (11), s'adapte à la zone de contour (47; 47'; 47"; 47'"; 47"") du racleur (16) en contact avec le contre-outil (20; 20'; 20"; 20'").

11. Dispositif de réception (10; 10'; 10"; 10'"; 10"") selon l'une des revendications 1 à 10, **caractérisé en ce que** le contre-outil (20'; 20"; 20'"; 20"") et/ou la tôle de retenue (39, 39'; 39"; 39'") forment une pince pour la fixation d'au moins une dent de réception (13) et, de préférence, une tôle de retenue (39, 39'; 39"; 39'"; 39"") est prévue pour la fixation d'une dent de réception (13) respective.

12. Dispositif de réception (10; 10'; 10"; 10'"; 10"") selon l'une des revendications 1 à 11, **caractérisé en ce que** le contre-outil (20'; 20"; 20'"; 20"") comprend une ouverture (52) pour recevoir une saillie (53) formée sur la dent d'alimentation (13).

13. Dispositif de ramassage (10"") selon l'une des revendications 1 à 12, **caractérisé en ce que** deux contre-outils (20"") voisins sont en contact l'un avec l'autre et forment un point de contact (54) avec un rayon (R5) supérieur au rayon (R1) du tambour, et les extrémités (18) des racleurs (16) sont espacées, lors de la rotation du tambour (11), par rapport à l'enveloppe (12) du tambour, de la valeur qui résulte de la différence des rayons (R5) et (R1).

14. Dispositif de réception (10") selon l'une des revendications 1 à 13, **caractérisé en ce que**
- le contre-outil (20") est formé par la dent de réception (13), la dent de réception (13) présentant au moins un bord extérieur formant la première arête de cisaillement (30"),
- au moins l'une des deuxièmes arêtes de cisaillement (31) formées sur l'un des racleurs (16) glisse le long de l'arête extérieure (53) de la dent de réception (13) lorsque le tambour (11) est en rotation,
de sorte que les racleurs (16) et les dents de ramassage (13) coopèrent en tant qu'outil et contre-outil et aident à l'enlèvement par les racleurs (16) du produit récolté ramassé par les dents de ramassage (13).

15. Machine de récolte (100) comprenant un dispositif de ramassage (10; 10'; 10"; 10'"; 10"") selon l'une des revendications 1 à 14.
